# EUROPEAN PATENT SPECIFICATION

(11) **EP 2 575 033 B1**
(45) Date of publication and mention of the grant of the patent: **13.11.2019**
(21) Application number: 11183528.6
(22) Date of filing: 30.09.2011
(51) Int. Cl.: G06F 3/14, G09G 3/3208

(54) **Method and device for overlapping display**
Verfahren und Vorrichtung zum Überlappen einer Anzeige
Procédé et dispositif pour faire chevaucher un affichage

(43) Date of publication of application: 03.04.2013
(73) Proprietor: BlackBerry Limited, Waterloo, ON N2K 0A7 (CA)
(72) Inventor: Prociw, Philip James, Waterloo, Ontario N2L 3W8 (CA)
(74) Representative: Bryn-Jacobsen, Caelia

(56) References cited:
- US-A1- 2004 252 076
- US-A1- 2011 164 047
- US-A1- 2011 175 902

## Description

### TECHNICAL FIELD

Various embodiments described herein relate to apparatus and methods associated with displays.

### BACKGROUND

In the field of image display devices there is a growing trend toward the use of higher resolution, complex images, and streaming video to create a rich visual experience for the user. These requirements are pushing the processing power demands for display devices beyond the limits of existing processors. In some situations this may result in streaming video appearing to skip, pause, or stutter. Additionally, users increasingly want display devices that are lighter and thinner and that consume less power.

US US2011/164047 relates to a display of images on a transparent display of an electronic device.

US2004/252076 relates to a multiple display electronic device.

US 2011/175902 relates to a multi-layer display system.

The present invention is set out in the independent claims, with some optional features set out in the claims dependent thereto.

### BRIEF DESCRIPTION OF THE DRAWINGS

FIG. 1 illustrates overlapping displays in accordance with some embodiments;
FIG. 2 illustrates overlapping displays and display processors in accordance with some embodiments;
FIG. 3 illustrates overlapping display content in accordance with some embodiments;
FIG. 4 illustrates a procedure for implementing overlapping displays in accordance with some embodiments; and
FIG. 5 illustrates overlapping displays implemented in a portable electronic device in accordance with some embodiments.

### DETAILED DESCRIPTION

The embodiments are set out in the appended set of claims; further examples called embodiments in the description are illustrative examples, not embodiments claimed in the present application. The following description and the drawings sufficiently illustrate specific embodiments to enable those skilled in the art to practice them. Other embodiments may incorporate structural, logical, electrical, process, and other changes. Portions and features of some embodiments may be included in, or substituted for, those of other embodiments.

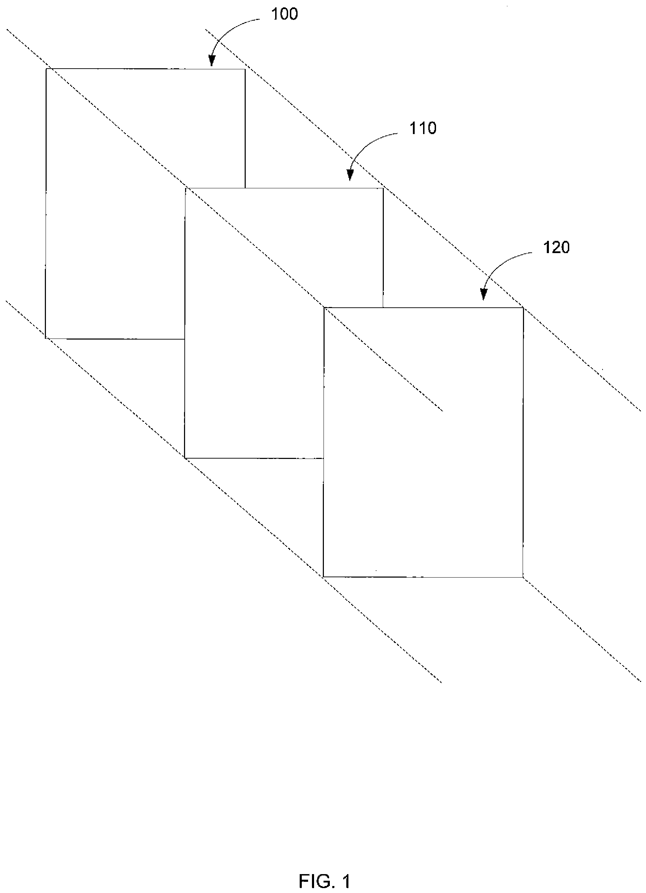

FIG. 1 illustrates overlapping tangible displays in accordance with some embodiments. Displays 100, 110, and 120 may be organic light emitting diode (OLED) displays. A display 120 overlaps another display 110 when it is positioned in front of the other display such that it completely or partially obscures the other display (from the point of view of a user viewing the displays) unless it is transparent. In some embodiments, displays 100, 110 and 120 may be partially overlapping. In some embodiments, displays 100, 110 and 120 may be of different shapes or dimensions. In some embodiments, displays 100, 110 and 120 may be completely overlapping. Although three displays are presented for illustrative purposes, any number of displays may be employed. The displays may be selectively or entirely transparent. In some embodiments, an OLED display may overlap a liquid crystal display (LCD). In some embodiments, other transparent display technologies may be used, including, for example, thin-film and electroluminescent displays.

OLED displays, which do not require backlighting, may be thinner than conventional displays, such as LCD's, and may require less power to operate in addition to being capable of being transparent.

In some embodiments, overlapping displays 100, 110, and 120 may be part of a portable electronic device such as a wireless communication device, a smart phone, a personal digital assistant (PDA), a laptop computer, a portable computer, a web tablet, a wireless telephone, a pager, an instant messaging device, a portable television, a portable DVD player, or a digital camera. Some portable electronic devices may be handheld, that is, sized to be held or carried in a human hand. In some embodiments, overlapping displays 100, 110, and 120 may be part of a GPS, a television, a computer monitor or other device that may display images including videos and other forms of information. In some embodiments, overlapping displays 100, 110 and 120 may be used in touch screen applications.

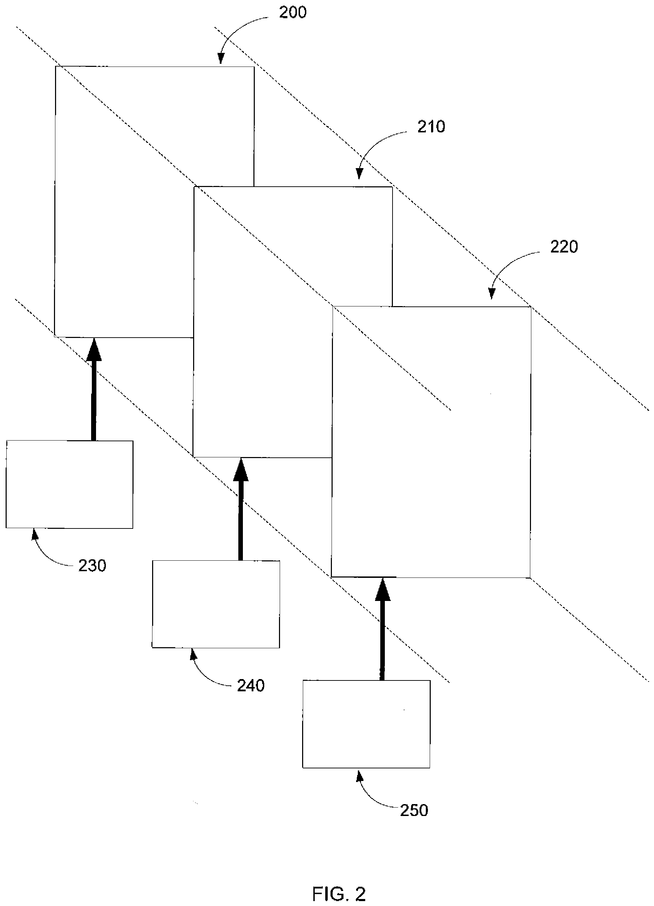

FIG. 2 illustrates overlapping displays and display processors in accordance with some embodiments. Displays 200, 210, and 220 may each be controlled by separate processors 230, 240, and 250. In some embodiments, processors 230, 240, and 250 may be physical processors. In some embodiments, processors 230, 240, and 250 may be logical processors. Examples of logical processors may include multiple independent processes or threads running on a single physical processor. In some embodiments, processors 230, 240, and 250 may maintain synchronized clocks. To attain synchronization, one of the processors can provide a clock signal for use by the other processors. Alternatively, a separate clock module may provide a clock signal to be shared by the processors. Alternatively, the processors may periodically update their clocks based on a comparison with a master clock to maintain synchronization.

The processors may interact together, enabling one display to enhance another display, or the processors may operate independently. In some embodiments, the energy consumption of the displays may be independent of one another. In some embodiments, one or more processors may be specialized or high performance graphics processors that are suitable for handling complex images. Other processors may be less expensive processors that are suitable for handling simpler images. In some embodiments, the simpler images may be controlled by a general purpose processor of the device incorporating the overlapping displays.

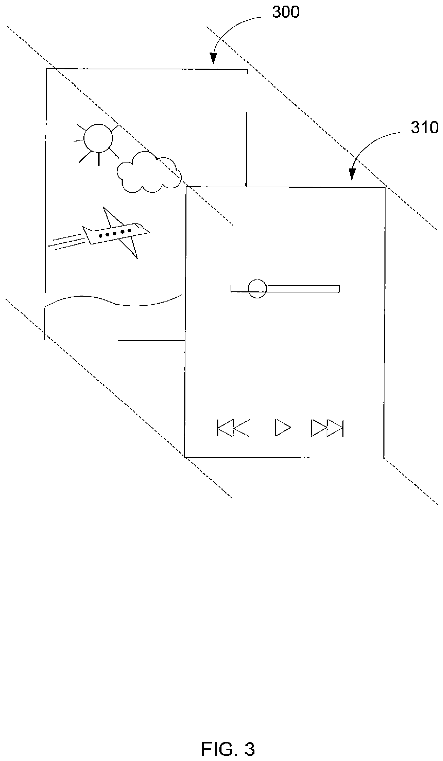

FIG. 3 illustrates overlapping display content, or images, in accordance with some embodiments. Display 300 may be configured to display streaming videos and display 310 may be configured to display on-screen controls. As used herein, a component is generally "configured" to perform a function when the component is capable of carrying out the function.

Streaming videos may comprise a series of images, displayed at a rate sufficient to create a visual effect that simulates motion. In some embodiments, display 300 may display a background image, while display 310 may display a message, an e-mail or some other form of text. Display content may be separated so that complicated images may be processed and maintained on one display, while simple images may be processed and maintained on another display. Processing efficiencies may be realized in this manner, particularly when only the simple image is being updated. In such a case, the complex image, with its associated complex processing requirements, does not need to be redrawn since it is on a separate display.

In some embodiments, the controlling processors 230, 240, and 250 may permit an uninterrupted display of the streaming video 300, while the on-screen controls 310 are being manipulated. In many cases, an uninterrupted display will be a "normal" display (from the point of view of a viewer), typically without jerks or stoppages or loss of image quality or other artifacts. Since the processing tasks associated with the various displays may be distributed among the controlling processors, the processor handling the streaming video on a particular display may not be burdened or interrupted by the need to interlace the on-screen controls onto the same display when a request is made to pause, skip, seek or play. This capability may avoid degradation of the streaming video that may be exacerbated in other conventional approaches when users attempt to manipulate on-screen controls.

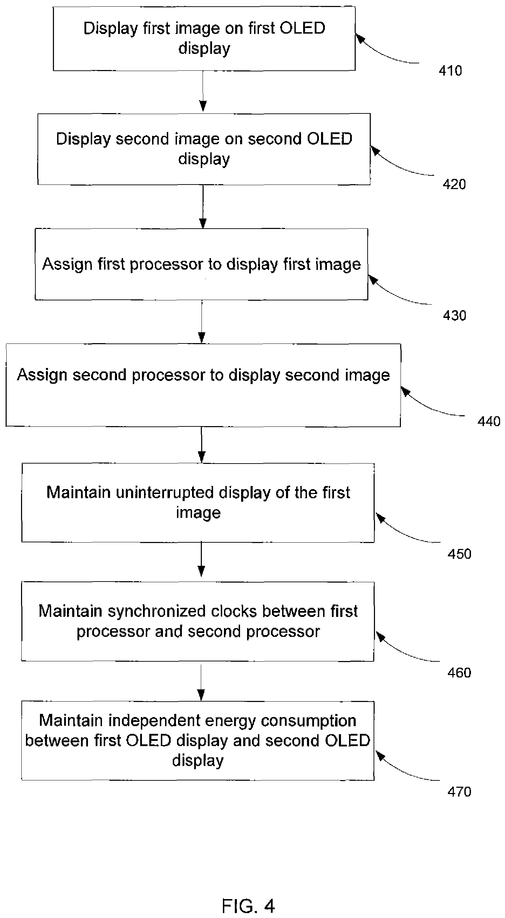

FIG. 4 illustrates a procedure for implementing overlapping displays in accordance with some embodiments. In the example procedure of FIG. 4, it is assumed for simplicity that there are two displays and both are OLED displays. Operation 410 comprises displaying a first image on a first OLED display. Operation 420 comprises displaying a second image on a second OLED display. The second OLED display may partially or completely overlap the first OLED display and may be selectively transparent to the first OLED display. The ability to adjust (i.e., control) the opacity of the individual OLED displays allows for tinting effects that may help with visibility in different lighting conditions as well as security.

A variety of visual effects may be implemented with the overlapping displays. A transition effect may be created between a first image and a second image wherein the transition is a gradual changeover from one image to the other. The transition effect may comprise the fading out of a first OLED display and fading in of a second OLED display. In some embodiments, the fading in of the second OLED display may be simultaneous with the fading out of the first OLED display. In some embodiments, the first image may be associated with one application, while the second image may be associated with a different application. The first image may be optimized for work activities, while the second image may be optimized for other activities. In some embodiments the first image may be a background image and the second image may be a message, such as a text message. In some embodiments the background image may be an animation such as a changing wallpaper pattern or slideshow. A visual floating effect may be created between an image on the first OLED display and an image on the second OLED display by taking advantage of the physical spacing between the first and second OLED displays such that the second image appears to float above the first image by the distance of the physical spacing. Such an effect may create an added sense of realism and a more satisfying user experience without any additional requirement for processing power.

Operation 430 comprises assigning a first processor to display the first image. A processor-which may be a logical processor or a physical processor-is assigned when the processor is responsible for or controls the displaying of image or the manner in which the image is displayed (including, but not limited to, controlling the opacity of the image). The first image displayed (operation 420) may be (for example) a streaming video. Operation 430 comprises assigning a second processor to display the second image. The second image displayed (operation 440) may be (for example) a relatively static display of on-screen controls. Note that the operations shown in FIG. 4 need not always be carried out in the order shown. Operations 410 through 440, for example, may be performed in any order other than that shown.

Operation 450 comprises maintaining an uninterrupted display of the first image. In this example, maintain refers to maintaining video performance.

The operation involves displaying both video content and video controls on separate displays to avoid impact to the video content playback performance. If carried out on a single display, there may be an impact to video performance when overlapping video controls onto video content. This involves additional processing, which may result in jitter/stutter/reduced frame rate if the processor is already struggling to display the video content alone. In a simple formula, this example recognizes that on a single display:

Total Processing Power = Processing Power to combine content and controls + Processing Power to display combined content.

And on multiple displays: Total Processing Power = Processing Power to display video content + Processing Power to display video control.

The Processing Power utilized on multiple displays may be significantly less than on a single display since the video controls are static (not a moving video), as opposed to the amount of post-processing required to the static image with the video.

Operation 460 comprises maintaining synchronized clocks between the first processor and the second processor. This may be accomplished wherein one of the processors provides a clock signal for use by the other processors. Alternatively, the processors may periodically update their clocks based on a comparison with a master clock to maintain synchronization.

Operation 470 comprises maintaining independent energy consumption between the first OLED display and the second OLED display. Independent energy consumption is maintained through the separation of display content onto different displays. If one display is an LCD display, and the other a transparent OLED, there exists a difference is power consumptions between one display and another (OLED having better power consumption). By separating content, a degree of optimization can be implemented to utilize the power consumption tradeoff based on content. LCD may hold visual/performance benefits over an OLED display that would make the use of a power-hungry display more favorable for certain applications. For some arrangements of overlapping displays, if only one is used to display content, the alternative displays may be "powered down," minimizing the power consumption.

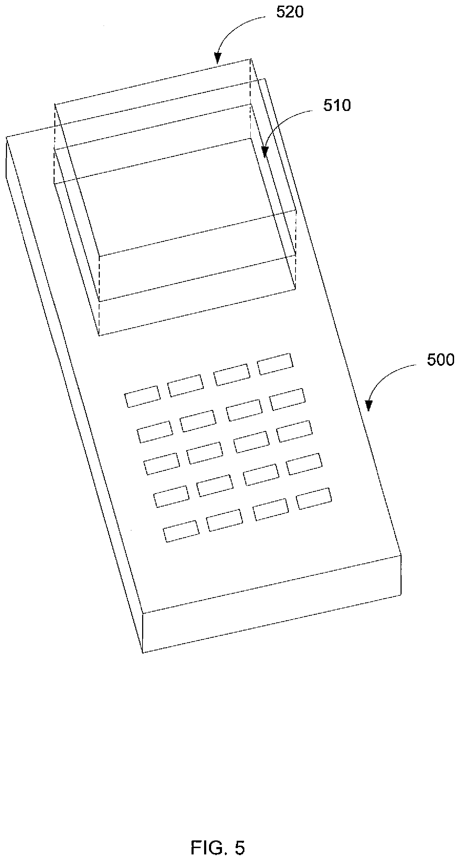

FIG. 5 illustrates overlapping displays implemented in a portable electronic device in accordance with some embodiments. Portable electronic device 500 may implement multiple overlapping displays 510 and 520. Displays 510 and 520 may be organic light emitting diode (OLED) displays. Although two displays are presented for illustrative purposes, any number of displays may be employed.

One or more of the embodiments of the concepts may realize one or more benefits, some of which have been mentioned already. Some embodiments may produce displays of images that are more aesthetically pleasing in one or more respects. For example, the display of one image (such as displaying an on-screen control) need not affect the fluidity or aesthetic appearance of another image. The absence of artifacts in one or more images may be less noticeable to a user (in comparison to artifacts that might be generated if a single processor controlled the displaying two or more images, which may be much more noticeable). Independent control of the images by independent processors, and their independent energy consumption, may result in more efficient energy usage. In the case of implementation in a handheld device, in which considerations of size and weight may be of importance, the concepts described herein can be implemented in a miniature display. The concepts herein may be further advantageous, however, in that they may be flexibly applied to devices having different purposes, sizes and shapes.

Embodiments may be implemented in one, or a combination, of hardware, firmware and software. Embodiments may be implemented as instructions stored on a machine-readable storage medium, which may be read and executed by at least one processor to perform the operations described herein. The machine-readable storage medium may be realized as a computer-readable storage meduim. A machine-readable medium may include any tangible medium for storing in a form readable by a machine (e.g., a computer, a mobile wireless device that includes a controller or processor). For example, a machine-readable medium may include read-only memory (ROM), random-access memory (RAM), magnetic disk storage media, optical storage media, and flash-memory devices.

The Abstract is provided to comply with 37 C.F.R. Section 1.72(b) requiring an abstract that will allow the reader to ascertain the nature and gist of the technical disclosure. It is submitted with the understanding that it will not be used to limit or interpret the scope or meaning of the claims. The following claims are hereby incorporated into the detailed description, with each claim standing on its own as a separate embodiment.

## Claims

1. A method performed by a portable electronic device comprising:
displaying, via a first processor of the portable electronic device, a first image of video content on a first organic light emitting diode (OLED) display;
displaying, via a second processor of the portable electronic device, a second image on a second OLED display, wherein the second OLED display overlaps the first OLED display and is selectively transparent to the first OLED display, wherein the first and second OLED displays operate independently from each other;
controlling the displaying of the first image of a series of images from video content on the first OLED display with the first processor; and
controlling the displaying of the second image of a user interactive on-screen control on the second OLED display with the second processor;
wherein the first and second processors operate independently to control respective first and second images independently, and wherein the first and second processors consume energy independently from each other and from the first and second OLED displays; and
further comprising displaying a transition between the first image and the second image, wherein the first OLED display fades out the first image and the second OLED display fades in the second image.

2. The method of claim 1, wherein the first processor is a physical processor specialized for graphics processing and the second processor is a logical processor operating on a general purpose processor.

3. The method of claim 1, wherein the first image is a streaming video and the second image is a user interactive on-screen control configured for display during playback of the streaming video.

4. The method of claim 3, further comprising maintaining an uninterrupted display of the streaming video during display of the user interactive on-screen control.

5. The method of claim 1, further comprising maintaining synchronized clocks in the first and second processors.

6. The method of claim 1, further comprising adjusting opacity of the second OLED display.

7. The method of claim 1, wherein the first image is a background image and the second image includes a message.

8. The method of claim 1, wherein energy consumption of the first OLED display is independent of energy consumption of the second OLED display.

9. A device comprising:
a first organic light emitting diode (OLED) display;
a second OLED display, wherein the second OLED display overlaps the first OLED display and is selectively transparent to the first OLED display, wherein the first and second OLED displays operate independently from each other;
a first processor to output and_control display of a first image of a series of images from video content on the first OLED display; and
a second processor to output and_control display of a second image of a user interactive on-screen control on the second OLED display;
wherein the first and second processors operate independently to control respective first and second images independently, wherein the first and second processors consume energy independently from each other and from the first and second OLED displays, and wherein a transition is displayed between the first image and the second image, wherein the first OLED display fades out the first image and the second OLED display fades in the second image.

10. The device of claim 9, wherein the first processor is a physical processor specialized for graphics processing and the second processor is a logical processor operating on a general purpose processor.

11. The device of claim 9, wherein the first processor is configured to display streaming video as the first image for display with the series of images and the second processor is configured to manage on-screen controls as the second image for display during playback of the streaming video.

12. The device of claim 9, wherein the first processor and the second processor maintain synchronized clocks; or wherein opacity of the second OLED display is controlled by the second processor; or wherein the device is a portable electronic device; or wherein energy consumption of the first OLED display is independent of energy consumption of the second OLED display.

13. A machine readable storage medium storing a set of instructions that, when executed by a machine, cause the machine to carry out the method of any one of claim 1-8.

## Patentansprüche

1. Verfahren, das von einer tragbaren elektronischen Vorrichtung durchgeführt wird, wobei das Verfahren die folgenden Schritte umfasst:
Anzeigen eines ersten Bildes des Videoinhalts über einen ersten Prozessor der tragbaren elektronischen Vorrichtung auf einer ersten organischen Leuchtdiodenanzeige (OLED = Organic Light Emitting Diode);
Anzeigen eines zweiten Bildes auf einer zweiten OLED-Anzeige über einen zweiten Prozessor der tragbaren elektronischen Vorrichtung, wobei die zweite OLED-Anzeige die erste OLED-Anzeige überlappt und selektiv für die erste OLED-Anzeige transparent ist, wobei die erste und zweite OLED-Anzeige unabhängig voneinander arbeiten;
Steuerung der Anzeige des ersten Bildes einer Reihe von Bildern aus Videoinhalten auf der ersten OLED-Anzeige mit dem ersten Prozessor; und
Steuerung der Anzeige des zweiten Bildes einer benutzerinteraktiven Bildschirmsteuerung auf dem zweiten OLED-Display mit dem zweiten Prozessor;
wobei die ersten und zweiten Prozessoren unabhängig voneinander arbeiten, um jeweilige erste und zweite Bilder unabhängig voneinander zu steuern, und wobei die ersten und zweiten Prozessoren unabhängig voneinander und von der ersten und zweiten OLED-Anzeige Energie verbrauchen; und
ferner umfassend das Anzeigen eines Übergangs zwischen dem ersten Bild und dem zweiten Bild, wobei die erste OLED-Anzeige das erste Bild ausblendet und die zweite OLED-Anzeige das zweite Bild einblendet.

2. Das Verfahren gemäß Anspruch 1, wobei der erste Prozessor ein physikalischer Prozessor ist, der auf die Grafikverarbeitung spezialisiert ist, und der zweite Prozessor ein logischer Prozessor ist, der auf einem Universalprozessor arbeitet.

3. Das Verfahren gemäß Anspruch 1, wobei das erste Bild ein Streaming-Video ist und das zweite Bild eine benutzerinteraktive Bildschirmsteuerung ist, die zum Anzeigen während der Wiedergabe des Streaming-Videos konfiguriert ist.

4. Das Verfahren gemäß Anspruch 3, ferner umfassend das Aufrechterhalten einer ununterbrochenen Anzeige des Streaming-Videos während der Anzeige der benutzerinteraktiven Bildschirmsteuerung.

5. Das Verfahren gemäß Anspruch 1, ferner umfassend das Beibehalten von synchronisierten Zeittakten in dem ersten und zweiten Prozessor.

6. Das Verfahren gemäß Anspruch 1, ferner umfassend das Einstellen der Transparenz der zweiten OLED-Anzeige.

7. Das Verfahren gemäß Anspruch 1, wobei das erste Bild ein Hintergrundbild ist und das zweite Bild eine Nachricht beinhaltet.

8. Das Verfahren gemäß Anspruch 1, wobei der Energieverbrauch der ersten OLED-Anzeige unabhängig vom Energieverbrauch der zweiten OLED-Anzeige ist.

9. Eine Vorrichtung, umfassend:
eine erste organische Leuchtdiodenanzeige (OLED);
eine zweite OLED-Anzeige, wobei die zweite OLED-Anzeige die erste OLED-Anzeige überlappt und selektiv für die erste OLED-Anzeige transparent ist, wobei die erste und zweite OLED-Anzeige unabhängig voneinander arbeiten;
einen ersten Prozessor zum Ausgeben und Steuern der Anzeige eines ersten Bildes einer Reihe von Bildern aus Videoinhalten auf der ersten OLED-Anzeige; und
einen zweiten Prozessor zum Ausgeben und Steuern der Anzeige eines zweiten Bildes einer benutzerinteraktiven Bildschirmsteuerung auf der zweiten OLED-Anzeige;
wobei der erste und der zweite Prozessor unabhängig voneinander arbeiten, um jeweilige erste und zweite Bilder unabhängig zu steuern, wobei der erste und der zweite Prozessor unabhängig voneinander und von der ersten und zweiten OLED-Anzeige Energie verbrauchen, und wobei ein Übergang zwischen dem ersten Bild und dem zweiten Bild angezeigt wird, wobei die erste OLED-Anzeige das erste Bild ausblendet und die zweite OLED-Anzeige das zweite Bild einblendet.

10. Die Vorrichtung gemäß Anspruch 9, wobei der erste Prozessor ein physikalischer Prozessor ist, der auf die Grafikverarbeitung spezialisiert ist, und der zweite Prozessor ein logischer Prozessor ist, der auf einem Universalprozessor arbeitet.

11. Die Vorrichtung gemäß Anspruch 9, wobei der erste Prozessor dazu konfiguriert ist, Streaming-Video als erstes Bild zur Anzeige mit der Reihe von Bildern anzuzeigen, und der zweite Prozessor dazu konfiguriert ist, On-Screen-Steuerungen als zweites Bild zur Anzeige während der Wiedergabe des Streaming-Videos zu verwalten.

12. Die Vorrichtung gemäß Anspruch 9, wobei der erste Prozessor und der zweite Prozessor synchronisierte Zeittakte beibehalten; oder wobei die Transparenz der zweiten OLED-Anzeige durch den zweiten Prozessor gesteuert wird; oder wobei die Vorrichtung eine tragbare elektronische Vorrichtung ist; oder wobei der Energieverbrauch der ersten OLED-Anzeige unabhängig vom Energieverbrauch der zweiten OLED-Anzeige ist.

13. Maschinenlesbares Speichermedium, das einen Satz von Anweisungen speichert, die, wenn sie von einer Maschine ausgeführt werden, bewirken, dass die Maschine das Verfahren gemäß einem der Ansprüche 1-8 durchführt.

## Revendications

1. Procédé mis en œuvre par un dispositif électronique portable, comprenant les étapes consistant à :
afficher, par le biais d'un premier processeur du dispositif électronique portable, une première image de contenu vidéo sur un premier dispositif d'affichage à diodes électroluminescentes organiques (DELO) ;
afficher, par le biais d'un second processeur du dispositif électronique portable, une seconde image sur un second dispositif d'affichage à DELO, où le second dispositif d'affichage à DELO chevauche le premier dispositif d'affichage à DELO et est sélectivement transparent au premier dispositif d'affichage à DELO, où les premier et second dispositifs d'affichage à DELO fonctionnent indépendamment l'un de l'autre ;
commander l'affichage de la première image d'une série d'images issues d'un contenu vidéo sur le premier dispositif d'affichage à DELO, à l'aide du premier processeur ; et
commander l'affichage de la seconde image d'une commande interactive d'utilisateur à l'écran sur le second dispositif d'affichage à DELO, à l'aide du second processeur ;
dans lequel les premier et second processeurs fonctionnent indépendamment pour commander indépendamment les première et seconde images respectives, et dans lequel les premier et second processeurs consomment de l'énergie indépendamment l'un de l'autre et des premier et second dispositifs d'affichage à DELO ; et
comprenant en outre l'affichage d'une transition entre la première image et la seconde image, dans lequel le premier dispositif d'affichage à DELO fait disparaître en fondu la première image et le second dispositif d'affichage à DELO fait apparaître en fondu la seconde image.

2. Procédé selon la revendication 1, dans lequel le premier processeur est un processeur physique spécialisé dans le traitement graphique et le second processeur est un processeur logique fonctionnant sur un processeur polyvalent.

3. Procédé selon la revendication 1, dans lequel la première image est une vidéo en continu et la seconde image est une commande interactive d'utilisateur à l'écran, conçue pour s'afficher pendant la lecture de la vidéo en continu.

4. Procédé selon la revendication 3, comprenant en outre le maintien d'un affichage ininterrompu de la vidéo en continu pendant l'affichage de la commande interactive d'utilisateur à l'écran.

5. Procédé selon la revendication 1, comprenant en outre le maintien d'une synchronisation d'horloges dans les premier et second processeurs.

6. Procédé selon la revendication 1, comprenant en outre l'ajustement de l'opacité du second dispositif d'affichage à DELO.

7. Procédé selon la revendication 1, dans lequel la première image est une image d'arrière-plan et la seconde image comporte un message.

8. Procédé selon la revendication 1, dans lequel la consommation d'énergie du premier dispositif d'affichage à DELO est indépendante de la consommation d'énergie du second dispositif d'affichage à DELO.

9. Dispositif comprenant :
un premier dispositif d'affichage à diodes électroluminescentes organiques (DELO) ;
un second dispositif d'affichage à DELO, où le second dispositif d'affichage à DELO chevauche le premier dispositif d'affichage à DELO et est sélectivement transparent au premier dispositif d'affichage à DELO, où les premier et second dispositifs d'affichage à DELO fonctionnent indépendamment l'un de l'autre ;
un premier processeur pour produire et commander l'affichage d'une première image d'une série d'images issues d'un contenu vidéo sur le premier dispositif d'affichage à DELO ; et
un second processeur pour produire et commander l'affichage d'une seconde image d'une commande interactive d'utilisateur à l'écran sur le second dispositif d'affichage à DELO ;
dans lequel les premier et second processeurs fonctionnent indépendamment pour commander indépendamment des première et seconde images respectives, dans lequel les premier et second processeurs consomment de l'énergie indépendamment l'un de l'autre et des premier et second dispositifs d'affichage à DELO, et dans lequel une transition s'affiche entre la première image et la seconde image, dans lequel le premier dispositif d'affichage à DELO fait disparaître en fondu la première image et le second dispositif d'affichage à DELO fait apparaître en fondu la seconde image.

10. Dispositif selon la revendication 9, dans lequel le premier processeur est un processeur physique spécialisé dans le traitement graphique et le second processeur est un processeur logique fonctionnant sur un processeur polyvalent.

11. Dispositif selon la revendication 9, dans lequel le premier processeur est conçu pour afficher une vidéo en continu en tant que première image à afficher avec la série d'images et le second processeur est conçu pour gérer des commandes à l'écran en tant que seconde image à afficher pendant la lecture de la vidéo en continu.

12. Dispositif selon la revendication 9, dans lequel le premier processeur et le second processeur maintiennent une synchronisation d'horloges ; ou dans lequel l'opacité du second dispositif d'affichage à DELO est réglée par le second processeur ; ou dans lequel le dispositif est un dispositif électronique portable ; ou dans lequel la consommation d'énergie du premier dispositif d'affichage à DELO est indépendante de la consommation d'énergie du second dispositif d'affichage à DELO.

13. Support de stockage lisible par machine, stockant un ensemble d'instructions qui, lorsqu'elles sont exécutées par une machine, amènent la machine à mettre en œuvre le procédé selon l'une quelconque revendications 1 à 8.
